# FASCICULE DE BREVET EUROPEEN

(11) **EP 0 718 479 B1**
(45) Date de publication et mention de la délivrance du brevet: **21.03.2001**
(21) Numéro de dépôt: 95402718.1
(22) Date de dépôt: 01.12.1995
(51) Int. Cl.: F01N 3/28, F01N 3/08, B01D 53/04

(54) **Dispositif de traitement des gaz d'échappement d'un moteur à allumage commandé comportant un corps catalyseur et un adsorbeur d'hydrocarbures disposés à l'intérieur d'un collecteur d'échappement**
Abgasbehandlungsvorrichtung eines Ottomotors mit einem Katalysator und einem Kohlenwasserstoffadsorber die in einem Abgaskrümmer angeordnet sind
Device to treat the exhaust gases of a spark ignited engine comprising a catalytic converter and an adsorber of hydrocarbons, placed in the interior of an exhaust manifold

(30) Priorité: 19.12.1994 FR 9415265
(43) Date de publication de la demande: 26.06.1996
(73) Titulaire: AUTOMOBILES PEUGEOT, 75116 Paris (FR); AUTOMOBILES CITROEN, 92200 Neuilly-sur-Seine (FR)
(72) Inventeur: Noirot, Rémi, F-92400 Courbevoie (FR); Bart, Jean-Michel, F-92400 Courbevoie (FR)
(74) Mandataire: Bouget, Lucien

(56) Documents cités:
- WO-A-86/04525
- DE-A- 3 928 760
- FR-A- 2 209 399
- US-A- 4 047 895
- US-A- 4 087 966
- PATENT ABSTRACTS OF JAPAN vol. 14 no. 13 (M-918) ,11 Janvier 1990 & JP-A-01 257710 (MAZDA) 13 Octobre 1989,

## Description

L'invention concerne une dispositif de traitement de gaz d'échappement d'un moteur à allumage commandé d'un véhicule automobile pour réaliser une élimination la plus complète possible des hydrocarbures contenus dans les gaz d'échappement du moteur.

Les gaz d'échappement des moteurs à allumage commandé ou moteurs à essence renferment différents polluants dont il est nécessaire de limiter au maximum les rejets dans l'atmosphère. Ces polluants sont constitués principalement par du monoxyde de carbone CO, des hydrocarbures imbrûlés HC et des oxydes d'azote NOₓ.

La réglementation concernant les normes de pollution des véhicules automobiles a tendance à devenir de plus en plus sévère, de sorte que les limites supérieures fixées de rejet des différents polluants ont tendance à devenir de plus en plus basses dans les nouvelles réglementations.

De manière à limiter les rejets de substances polluantes dans l'atmosphère, on doit équiper les véhicules à moteur à essence d'un pot catalytique à l'intérieur duquel les substances polluantes des gaz d'échappement subissent une oxydation ou une réduction catalysée qui les transforme en substances gazeuses non polluantes telles que le dioxyde de carbone CO₂, la vapeur d'eau ou l'azote. On utilise actuellement dans les pots catalytiques des véhicules à moteur à essence, des catalyseurs permettant de réaliser l'oxydation catalytique du monoxyde de carbone et des hydrocarbures et la réduction des oxydes d'azote. De tels catalyseurs sont appelés catalyseurs trois voies.

Les catalyseurs utilisés dans les pots catalytiques ne remplissent correctement leur fonction que lorsqu'ils sont portés à une température minimale qui peut être par exemple comprise entre 250 et 350°C et qui se situe de préférence au voisinage de 300°C, température à laquelle les catalyseurs généralement utilisés permettent d'atteindre un taux de conversion des substances polluantes de l'ordre de 90 %.

Le matériau catalyseur disposé sur le trajet des gaz dans la ligne d'échappement du véhicule n'est généralement échauffé que par le passage des gaz d'échappement du moteur, de sorte qu'il est pratiquement inactif au démarrage du moteur et pendant une certaine période de temps suivant le démarrage.

Dans le cas des essais normalisés des pots catalytiques trois voies (parcours normalisé ECE), le délai d'amorçage du catalyseur est d'environ 120 secondes après le démarrage. On a constaté par des mesures d'émissions cumulées de substances polluantes que, pendant cet intervalle de temps, sont émis environ 90 % des quantités totales de CO émises au cours de l'essai, 75 % des quantités d'hydrocarbures et 50 % des quantités d'oxyde d'azote.

Les pots catalytiques dans lesquels le catalyseur est échauffé uniquement par les gaz d'échappement ne sont donc pas satisfaisants et ne permettent pas de répondre aux besoins fixés par les normes anti-pollution qui entreront en vigueur dans quelques années.

On a donc tenté de réduire le délai d'amorçage des catalyseurs en limitant les pertes de chaleur le long de la ligne d'échappement, en rapprochant le pot catalytique du moteur ou en utilisant un dispositif auxiliaire de préchauffage du catalyseur tel qu'un brûleur à gaz ou un dispositif de chauffage électrique.

On a également envisagé, en particulier pour réduire les émissions d'hydrocarbures, de mettre le gaz d'échappement du moteur en contact avec des matériaux ayant des propriétés d'adsorption des substances polluantes, plus particulièrement des hydrocarbures. De tels matériaux peuvent être constitués par exemple par une zéolithe ou du charbon actif.

Le principe de fonctionnement des adsorbeurs de substances polluantes et en particulier des hydrocarbures repose sur la propriété d'adsorption physique d'une substance telle que les hydrocarbures par l'adsorbeur, tant que la température de l'adsorbeur et des gaz d'échappement reste inférieure à une certaine limite.

Dans une première phase, la substance polluante est piégée par le matériau adsorbeur, par phénomène d'adsorption physique ou physico-chimique.

Dans une seconde phase, sous l'effet de la température, il se produit une désorption de la substance polluante qui est entraînée par les gaz d'échappement de manière à venir en contact avec le catalyseur. La vitesse de désorption de la substance polluante dépend en particulier de la concentration de la substance polluante dans les gaz d'échappement et de la température des gaz. Pour obtenir une efficacité optimale du procédé de traitement des gaz avec adsorption d'une ou plusieurs substances polluantes, il est nécessaire que la ou les substances polluantes soient retenues sur le piège par adsorption dès la température ambiante et soient libérées par désorption à une température supérieure ou égale à la température d'amorçage du catalyseur.

Dans les lignes d'échappement à pot catalytique utilisant un adsorbeur de substances polluantes, l'adsorbeur est placé en amont du catalyseur, si bien qu'une partie de l'énergie thermique transportée par les gaz d'échappement est dissipée à l'intérieur du piège comportant l'adsorbeur de substances polluantes. Il en résulte que la température du matériau d'adsorption est susceptible de s'élever rapidement et qu'en revanche la température du catalyseur s'élève plus lentement que dans un pot catalytique sans matériau d'adsorption. Le temps de stockage des substances polluantes dans le piège est donc généralement trop court et le délai d'amorçage du catalyseur est augmenté, si bien que les substances polluantes sont susceptibles d'être libérées par désorption avant que le catalyseur ne soit actif.

De manière à améliorer le fonctionnement du pot catalytique, on a proposé des dispositifs de traitement de gaz d'échappement comportant un piège rempli de matériau d'adsorption et un ou plusieurs pots catalytiques disposés de manière successive sur le trajet des gaz dans la ligne d'échappement. Une conduite en dérivation autour du piège d'adsorption et une vanne d'ouverture et de fermeture alternées du conduit en dérivation et du conduit principal de la ligne d'échappement permettent de réaliser un fonctionnement en deux phases, les gaz d'échappement traversant successivement le matériau d'adsorption et le matériau catalyseur dans une première phase, et venant en contact uniquement avec le matériau catalyseur dans une seconde phase après la mise en température du matériau catalyseur. Dans un tel dispositif, la vitesse d'échauffement du matériau adsorbant reste élevée et la vitesse de mise en température du catalyseur reste inférieure à la vitesse d'échauffement du catalyseur d'un pot catalytique sans matériau adsorbant.

Les moteurs à combustion interne tels que les moteurs à essence peuvent comporter un collecteur d'échappement ayant une enveloppe de forme cylindrique dans laquelle débouche, dans une direction sensiblement tangentielle, les tubulures d'échappement de chacun des cylindres du moteur. L'une au moins des extrémités longitudinales du collecteur d'échappement est reliée à une ligne d'échappement du véhicule automobile.

Du fait que les gaz d'échappement parviennent dans le collecteur directement à la sortie du moteur avec de faibles pertes thermiques, il peut être avantageux de placer le catalyseur trois voies à l'intérieur du collecteur.

De telles dispositions ont déjà été proposées. Cependant, on n'a jamais proposé de placer dans le collecteur d'échappement d'un moteur à combustion interne, à la fois un catalyseur de traitement et un adsorbeur de matières polluantes telles que des hydrocarbures.

Dans le WO-A-86/04525, on a proposé un dispositif de traitement catalytique des gaz d'échappement d'un moteur Diesel comportant dans une enceinte cylindrique dans laquelle les gaz d'échappement pénètrent tangentiellement, un corps catalyseur cellulaire et un lit de particules recouvertes de catalyseur dans le fond d'une chambre annulaire entourant le corps catalyseur. On réalise une post-combustion des gaz et une adsorption des suies dans la chambre annulaire périphérique et une post-combustion et la réduction d'oxyde d'azote dans le corps catalyseur.

Les particules n'occupent qu'une partie basse de la chambre annulaire et ne permettent pas de réduire les rejets d'hydrocarbures imbrûlés.

Le but de l'invention est donc de proposer un dispositif de traitement des gaz d'échappement d'un moteur à allumage commandé d'un véhicule automobile permettant de réduire de manière sensible les proportions d'hydrocarbures imbrûlés dans les gaz d'échappement du moteur, dans toutes les phases de fonctionnement du moteur et quelle que soit la température des gaz d'échappement du moteur. Le dispositif comporte au moins un corps catalyseur placé, dans une disposition centrale, à l'intérieur d'un collecteur d'échappement du moteur ayant une enveloppe de forme cylindrique dans laquelle débouche, dans une direction sensiblement tangentielle, au moins une tubulure d'échappement communiquant avec un cylindre du moteur et qui est reliée, à au moins une de ses extrémités longitudinales, à au moins une ligne d'échappement du véhicule automobile et au moins un moyen d'adsorption d'hydrocarbures contenus dans les gaz d'échappement dans une disposition périphérique autour du corps catalyseur, de telle sorte que les gaz d'échappement introduits par la tubulure dans l'enveloppe circulent de manière tourbillonnaire autour du corps catalyseur en contact avec le moyen d'adsorption et avec une surface externe du corps catalyseur.

Afin de bien faire comprendre l'invention, on va maintenant décrire, à titre d'exemple non limitatif, en se référant aux figures jointes en annexe, un mode de réalisation d'un dispositif de traitement des gaz d'échappement d'un moteur à essence, suivant l'invention.

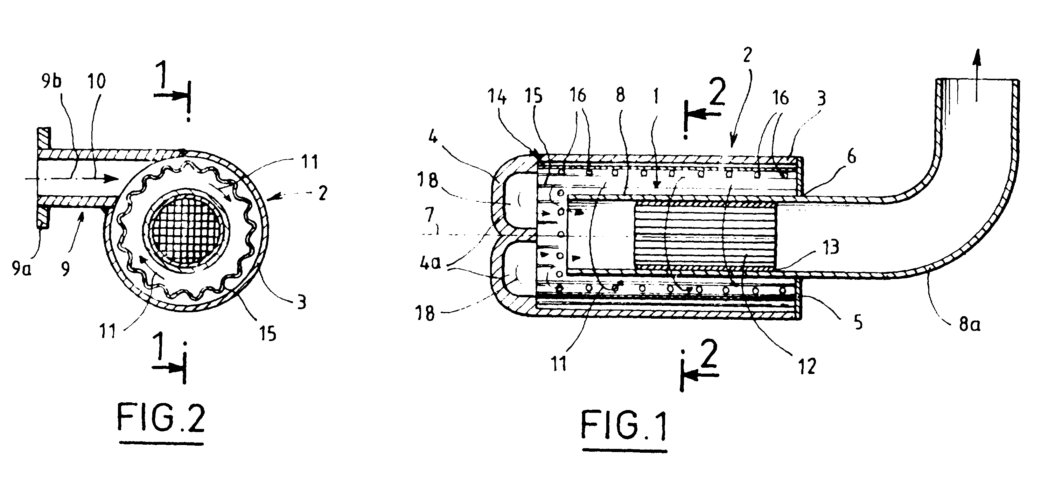

Les figures 1 et 2 sont relatives à un premier mode de réalisation de l'invention.

La figure 1 est une vue en coupe axiale suivant 1-1 de la figure 2.

La figure 2 est une vue en coupe transversale suivant 2-2 de la figure 1.

Les figures 3 et 4 sont relatives à un second mode de réalisation d'un dispositif suivant l'invention.

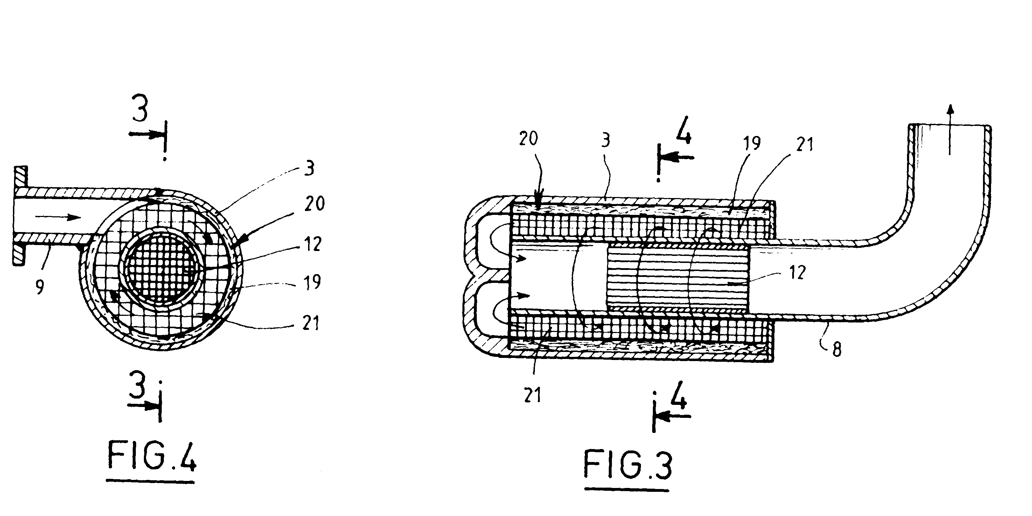

La figure 3 est une vue en coupe axiale suivant 3-3 de la figure 4.

La figure 4 est une vue en coupe transversale suivant 4-4 de la figure 3.

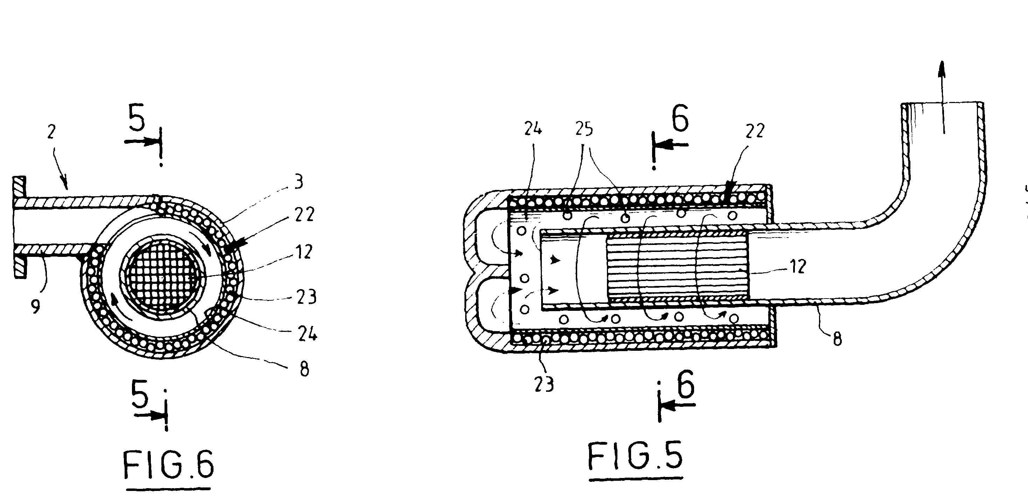

Les figures 5 et 6 sont relatives à un troisième mode de réalisation du dispositif de traitement suivant l'invention.

La figure 5 est une vue en coupe longitudinale suivant 5-5 de la figure 6.

La figure 6 est une vue en coupe transversale suivant 6-6 de la figure 5.

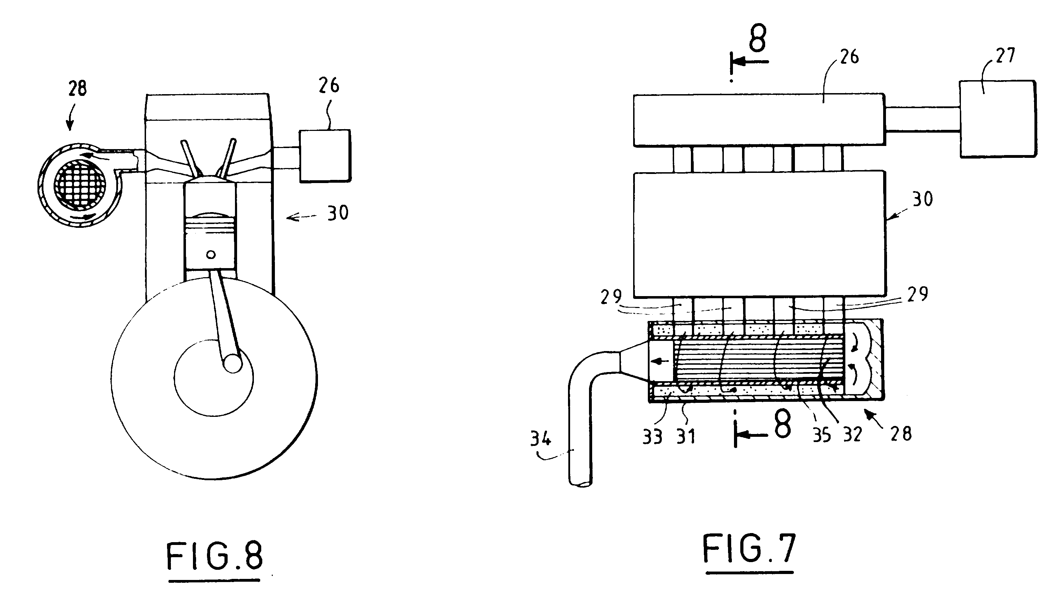

La figure 7 est une vue de dessus d'un moteur à essence équipé d'un dispositif de traitement suivant l'invention.

La figure 8 est une vue en coupe suivant 8-8 de la figure 7.

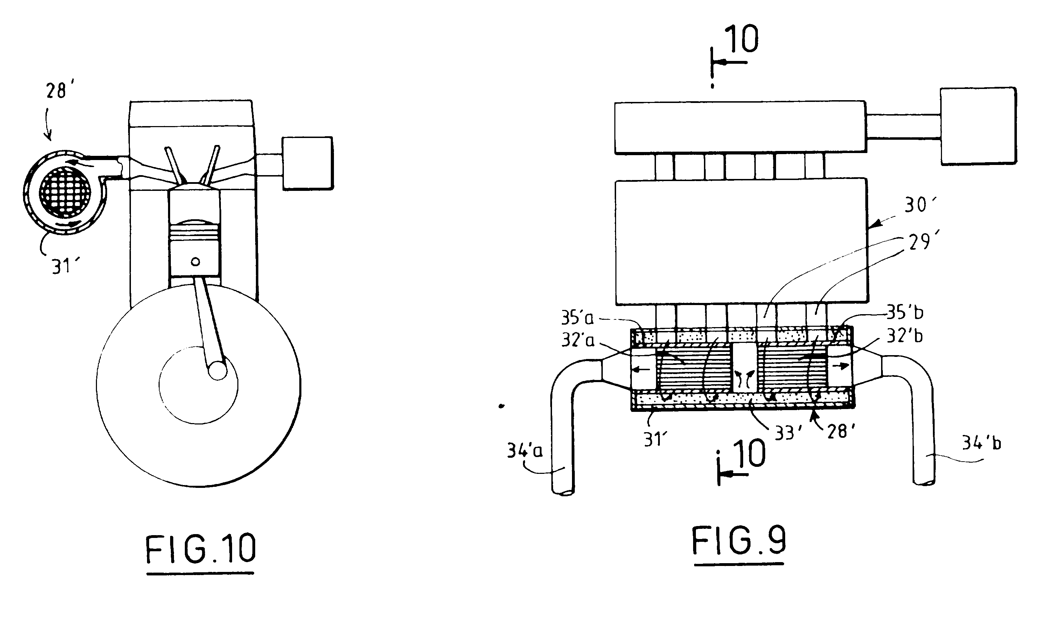

La figure 9 est une vue de dessus et en coupe d'un moteur à essence comprenant un dispositif de traitement suivant l'invention et suivant une variante de réalisation.

La figure 10 est une vue en coupe suivant 10-10 de la figure 9.

Sur les figures 1 et 2, on voit un dispositif de traitement de gaz d'échappement 1 suivant l'invention disposé à l'intérieur du collecteur d'échappement 2 d'un moteur à essence.

Le collecteur d'échappement 2 comporte une enveloppe 3 en tôle d'acier inoxydable, de forme sensiblement cylindrique fermée à l'une de ses extrémités par un fond 4 légèrement bombé, de manière à ménager à l'intérieur de l'enveloppe 3, une cavité 4a de forme sensiblement torique.

Sur la partie d'extrémité de l'enveloppe 3 du collecteur 2 opposée au fond 4, est fixé, de manière étanche, un fond plat 5 traversé par une ouverture centrale 6 dans laquelle est engagée, dans la direction axiale 7 du collecteur 2, une partie terminale rectiligne 8 d'une ligne d'échappement 8a du véhicule automobile dont le moteur à essence assure la propulsion. Le tronçon terminal rectiligne 8 de la ligne d'échappement constituant un conduit de recueil des gaz d'échappement à l'intérieur du collecteur s'étend dans la direction axiale 7, à l'intérieur de l'enveloppe 3 du collecteur, sur une longueur un peu inférieure à la longueur totale du collecteur, de manière que l'extrémité du conduit 8 se trouve en vis-à-vis et à proximité du fond 4 de l'enveloppe 3 dans lequel est ménagée la cavité 4a.

Comme il est visible sur la figure 2, l'enveloppe 3 du collecteur 2 comporte une ouverture dans sa partie supérieure, au niveau de laquelle est fixée par soudure, sur l'enveloppe 3, une tubulure 9 comportant une bride 9a de raccordement à la culasse du moteur. La tubulure 9 débouche à l'intérieur de l'enveloppe 3 du collecteur 2 dans une direction 9b sensiblement tangentielle par rapport à l'enveloppe cylindrique 3. Les gaz d'échappement du moteur qui circulent dans la direction de l'axe 9b de la tubulure, comme indiqué par la flèche 10, pénètrent dans une direction tangentielle à l'intérieur de l'enveloppe 3 et sont mis en circulation à l'intérieur de l'enveloppe 3, sous forme d'un courant rotatif autour de l'axe 7 de l'enveloppe 3 du collecteur, comme représenté par les flèches 11.

Le dispositif de traitement de gaz d'échappement suivant l'invention, désigné de manière générale par le repère 1, qui est disposé entièrement à l'intérieur de l'enveloppe 3 du collecteur, comporte un corps catalyseur 12 disposé à l'intérieur du conduit 8, dans sa partie introduite à l'intérieur du collecteur et un adsorbeur 14 disposé autour du corps catalyseur 12 et du conduit 8, dans un espace annulaire délimité à l'intérieur de l'enveloppe 3 du collecteur par le conduit 8.

Le corps catalyseur 12, qui peut être fixé à l'intérieur d'une enveloppe cylindrique métallique 13 en acier inoxydable insérée dans le conduit 8, comporte un support traversé par des canaux de circulation des gaz de direction longitudinale sensiblement parallèles à l'axe 7 de l'enveloppe du collecteur sur lequel sont déposés des matériaux catalyseurs tels que des métaux précieux. Le corps catalyseur 12 réalisé sous forme monolithique doit permettre à la fois la conversion par oxydation du monoxyde de carbone CO et des hydrocarbures HC imbrûlés, sous forme de dioxyde de carbone CO₂ et de vapeur d'eau H₂O et la conversion des oxydes d'azote NOₓ par réduction, sous la forme d'azote N₂ et d'oxygène O₂. Le corps catalyseur 12 est du type désigné comme catalyseur trois voies.

Un tel corps catalyseur est un élément connu dans la technique de construction des pots catalytiques.

L'adsorbeur 14 peut être réalisé sous la forme d'une enveloppe tubulaire 15 en tôle d'acier inoxydable ondulée revêtue d'un adsorbeur d'hydrocarbures HC constitué par exemple d'une zéolithe ou de charbon actif. L'enveloppe tubulaire 15 peut être réalisée par enroulement sur elle-même d'une tôle ondulée en acier inoxydable revêtue de matériau d'adsorption d'hydrocarbures HC ou directement sous la forme d'un tube en acier inoxydable revêtu extérieurement et intérieurement de matériau d'adsorption et présentant, suivant sa périphérie, des ondulations successives de direction axiale.

L'enveloppe tubulaire 15 de l'adsorbeur 14 présente une longueur dans la direction axiale sensiblement égale à la distance entre le fond plat 5 et la partie périphérique du fond bombé 4 du collecteur 2. L'enveloppe tubulaire 15 de l'adsorbeur 14 peut être fixée à l'intérieur de l'enveloppe 3, par serrage entre les fonds 5 et 6 du collecteur.

L'enveloppe tubulaire 15 de l'adsorbeur 14 comporte des ouvertures traversantes 16 réparties suivant toute sa surface, de manière à permettre aux gaz d'échappement pénétrant dans le collecteur, de traverser l'enveloppe de l'adsorbeur qui est ainsi perméable aux gaz d'échappement sur toute sa surface. Les gaz d'échappement pénétrant dans une direction tangentielle dans l'enveloppe 3 du collecteur viennent en contact avec l'enveloppe 15 de l'adsorbeur 14 qui est revêtue d'une couche de matériau d'adsorption des hydrocarbures imbrûlés. Les ouvertures 16 permettent le passage des gaz à l'intérieur de l'enveloppe 15, de sorte que les gaz d'échappement en circulation tourbillonnaire autour de l'axe 7 de la chambre du collecteur 3, comme représenté par les flèches 11, peuvent venir en contact avec l'enveloppe 15 sur sa face extérieure et sur sa face intérieure et avec la surface extérieure du conduit d'échappement 8 dans lequel est disposé le corps catalyseur 12. Les gaz chauds provenant du moteur et en circulation tourbillonnaire viennent donc en contact avec l'adsorbeur 14 et se trouvent en contact thermique avec la surface externe du corps catalyseur 12 dont ils assurent l'échauffement.

La surface active de l'enveloppe 15 est accrue par la présence des ondulations. En outre, les ondulations favorisent la mise en contact des gaz d'échappement avec les surfaces actives en perturbant l'écoulement des gaz d'échappement. Les hydrocarbures imbrûlés contenus dans les gaz d'échappement sont adsorbés par les surfaces de l'adsorbeur 14 dans une proportion importante. Les matériaux d'adsorption sont choisis de manière que les hydrocarbures soient adsorbés dès la température ambiante. L'adsorption des hydrocarbures est donc réalisée dès le démarrage du moteur à essence et pendant toutes les phases initiales du fonctionnement du moteur pendant lesquelles les gaz d'échappement sont à une température relativement basse, par exemple inférieure à 300°C.

En outre, les gaz d'échappement viennent en contact avec la surface extérieure du conduit d'échappement 8 dans lequel est disposé le corps catalyseur 12. Les gaz d'échappement assurent donc l'échauffement du corps catalyseur trois voies 12 dont la surface extérieure est en contact intime avec la surface intérieure du conduit 8.

Pendant les phases initiales de fonctionnement du moteur, la température du corps catalyseur 12 s'élève progressivement, du fait de sa mise en contact thermique avec les gaz d'échappement dont la température augmente.

Une partie des gaz d'échappement en circulation à l'intérieur de l'enveloppe 3 du collecteur 2 vient en contact avec la surface de la cavité 4a du fond 4 du collecteur assurant un renvoi de ces gaz dans une direction proche de la direction de l'axe 7 de l'enveloppe du collecteur 2.

Les gaz mis en circulation tourbillonnaire à l'intérieur de l'enveloppe 3 du collecteur 2 et parvenant à l'extrémité du conduit d'échappement 8 pénètrent dans le conduit d'échappement dans la direction axiale 7 pour traverser le corps catalyseur 12.

Tant que la température du corps catalyseur 12 est inférieure à la température d'amorçage du catalyseur trois voies, les gaz d'échappement traversent le corps catalyseur 12, sans qu'il se produise une oxydation et une conversion en CO₂ et H₂O des hydrocarbures imbrûlés.

Cependant, du fait qu'une proportion importante des hydrocarbures des gaz d'échappement est adsorbée par les surfaces de l'adsorbeur 14, les gaz rejetés à l'atmosphère pendant les phases initiales de fonctionnement du moteur renferment des proportions d'hydrocarbures très nettement inférieures aux proportions contenues dans le gaz d'échappement à la sortie du moteur.

Les éléments constitutifs du dispositif de traitement, à savoir le corps catalyseur 12 et l'adsorbeur 14 sont réalisés de manière telle que l'adsorbeur 14 atteint sa température de désorption des hydrocarbures, sensiblement au moment où le corps catalyseur trois voies 12 atteint sa température d'amorçage pour l'oxydation des hydrocarbures.

Lorsque la température de désorption est atteinte, les hydrocarbures retenus dans le piège constitué par l'adsorbeur 14 sont libérés progressivement et pénètrent avec les gaz d'échappement qui réalisent leur balayage, à l'intérieur du conduit d'échappement 8 dans lequel se trouve le corps catalyseur 12. Le corps catalyseur 12 qui est à une température au moins égale à sa température d'amorçage de l'oxydation des hydrocarbures assure la conversion des hydrocarbures en CO₂ et H₂O, dans une proportion importante.

Les gaz rejetés à l'atmosphère ne renferment que de faibles quantités d'hydrocarbures imbrûlés.

La température d'amorçage du catalyseur et la température de désorption de l'adsorbeur sont atteintes pratiquement simultanément pendant la montée en température des gaz d'échappement, après le démarrage du moteur. Cette mise en température se produit généralement après une durée de l'ordre de 120 secondes.

Le dispositif de traitement suivant l'invention permet donc de limiter les rejets d'hydrocarbures dans toutes les phases de fonctionnement du moteur et de répondre aux normes les plus exigeantes.

Sur les figures 3 et 4 et sur les figures 5 et 6, on a représenté un second et un troisième modes de réalisation d'un dispositif de traitement suivant l'invention disposé à l'intérieur d'un collecteur d'échappement d'un moteur à essence.

Le second et le troisième modes de réalisation du dispositif de traitement selon l'invention ne diffèrent du premier mode de réalisation que par la structure et le montage de l'adsorbeur. On ne décrira donc que cette partie du dispositif en regard des figures 3 et 4 et en regard des figures 5 et 6, respectivement.

En outre, les éléments correspondants et identiques sur les figures 3 et 4 et 5 et 6 d'une part et 1 et 2 d'autre part portent les mêmes repères.

Dans le cas du second mode de réalisation représenté sur les figures 3 et 4, le moyen d'adsorption 20 est constitué par une couche de fibres métalliques 19 revêtues de matériau d'adsorption des hydrocarbures maintenue contre la surface intérieure de la chambre cylindrique 3 du collecteur 2 par une pièce de forme annulaire 21 en grillage métallique réalisée à partir de fils d'acier inoxydable. La pièce annulaire 21 en grillage métallique est enfilée sur la partie d'extrémité du conduit d'échappement 8 et présente une épaisseur dans la direction radiale lui permettant de maintenir la couche 19 de fibres métalliques revêtues de matériau d'adsorption par serrage élastique contre la surface intérieure de l'enveloppe 3 du collecteur 2. La couche de fibres 19 présente une forme annulaire et comporte une ouverture traversante au niveau de l'ouverture de l'enveloppe 3 suivant laquelle est fixée la tubulure 9.

Le fonctionnement du dispositif représenté sur les figures 3 et 4 est sensiblement identique au fonctionnement du dispositif représenté sur les figures 1 et 2, les gaz d'échappement pénétrant dans le collecteur d'échappement venant en contact avec la couche 19 de fibres métalliques revêtues de matériau adsorbant, pendant leur circulation tourbillonnaire autour de l'axe de la chambre du collecteur. De plus, les gaz d'échappement viennent en contact avec la surface extérieure du conduit d'échappement 8 à travers le grillage 21 et assure l'échauffement du corps catalyseur 12 à travers la paroi du conduit d'échappement 8.

Sur les figures 5 et 6, on a représenté un troisième mode de réalisation d'un dispositif de traitement suivant l'invention.

Dans ce mode de réalisation, l'adsorbeur d'hydrocarbures 22 est constitué par un lit de billes d'alumine 23 revêtues d'un matériau d'adsorption des hydrocarbures maintenu contre la paroi intérieure de la chambre cylindrique 3 du collecteur d'échappement 2 par une enveloppe cylindrique 24 en tôle d'acier inoxydable placée et fixée dans une disposition coaxiale à l'intérieur de la chambre de l'enveloppe cylindrique 3 du collecteur 2. L'enveloppe tubulaire 24 en acier inoxydable est traversée par des ouvertures 25 dont le diamètre est légèrement inférieur au diamètre des billes constituant le lit 23. De préférence, les billes d'alumine du lit 23 ont un diamètre pouvant aller de 2 à 3 mm. Le lit 23 remplit un espace de forme annulaire entre la paroi intérieure de l'enveloppe 3 du collecteur et la paroi de l'enveloppe 24 en acier inoxydable disposée coaxialement par rapport à l'enveloppe 3. Le lit de billes 23 est interrompu au niveau de l'ouverture de la tubulure 9 débouchant dans la chambre du collecteur 2.

A titre de variante, le maintien du lit de billes 23 contre la surface intérieure de l'enveloppe 3 du collecteur peut être assuré par une pièce annulaire en grillage de fils d'acier inoxydable telle que la pièce 21 représentée sur les figures 3 et 4, engagée sur le conduit 8, constituant l'enveloppe du corps catalyseur 12.

Les gaz d'échappement introduits dans la chambre du collecteur 2 par la tubulure 9 pénètrent dans le lit de billes 23 de l'adsorbeur 22 et circulent, à l'intérieur du lit de billes, au contact de la surface extérieure des billes qui est revêtue d'une matière d'adsorption des hydrocarbures. Une partie des hydrocarbures imbrûlés contenus dans les gaz d'échappement est retenue par l'adsorbeur 22 dès le démarrage du moteur, les gaz d'échappement étant à une température voisine de la température ambiante.

De plus, les gaz d'échappement passant au travers des ouvertures 25 pénètrent dans l'espace annulaire compris entre l'enveloppe 24 en acier inoxydable maintenant le lit de billes 23 et le conduit d'échappement 8 dans lequel est disposé le corps catalyseur 12. Les gaz d'échappement qui sont en circulation tourbillonnaire autour de l'axe du collecteur à l'intérieur de cet espace assurent progressivement l'échauffement du corps catalyseur 12 à travers la paroi du conduit 8 lors de leur montée en température.

Le fonctionnement du dispositif selon le troisième mode de réalisation est donc identique au fonctionnement du dispositif selon le premier et le second modes de réalisation.

Sur les figures 7 et 8, on a représenté un moteur à essence désigné de manière générale par le repère 30 qui comporte quatre cylindres en ligne alimentés en air de combustion par un collecteur d'admission 26 relié à un filtre à air 27, par l'intermédiaire de quatre tubulures d'admission reliées chacune à un cylindre du moteur.

Les quatre cylindres du moteur sont reliés chacun par l'intermédiaire d'une tubulure 29, à un collecteur d'échappement 28 constituant une enveloppe pour un dispositif de traitement suivant l'invention.

L'enveloppe cylindrique du collecteur 28 est disposée de manière que son axe se trouve dans la direction de la ligne de cylindres du moteur 30.

Chacune des tubulures d'échappement 29 débouche dans la chambre du collecteur 28 délimitée par une enveloppe cylindrique 31, dans une direction tangentielle.

L'enveloppe 31 du collecteur 29 est reliée à l'une de ses extrémités axiales à une ligne d'échappement 34 du véhicule automobile dont la propulsion est assurée par le moteur 30. La ligne d'échappement 34 est prolongée, à l'intérieur de l'enveloppe 31 du collecteur 28, dans la direction axiale de l'enveloppe 31, par un conduit 35 dans lequel est logé un corps catalyseur 32.

L'espace de forme annulaire compris entre le conduit 35 et la paroi intérieure de l'enveloppe 31 contient un matériau 33 d'adsorption des hydrocarbures.

Le corps catalyseur 32 et le matériau d'adsorption 33 placés de manière coaxiale à l'intérieur de l'enveloppe 31 du collecteur 28 constituent un dispositif de traitement suivant l'invention tel que décrit en regard des figures 1 à 6.

Sur les figures 9 et 10, on a représenté une variante de réalisation du dispositif de traitement de gaz d'échappement d'un moteur à essence représenté sur les figures 7 et 8.

Les éléments correspondants sur les figures 9 et 10 d'une part et 7 et 8 d'autre part sont désignés par les mêmes repères, avec cependant l'exposant ' (prime) en ce qui concerne les éléments représentés sur les figures 9 et 10.

Le moteur 30' comporte un collecteur d'échappement 28' ayant une enveloppe cylindrique 31' dont l'axe est parallèle à la ligne de cylindres du moteur 30'. Les tubulures d'échappement 29' du moteur 30' débouchent à l'intérieur de l'enveloppe cylindrique 31' du collecteur 28', dans une direction tangentielle.

Le collecteur 28' est relié à chacune de ses extrémités à une ligne d'échappement, respectivement 34'a et 34'b. Les lignes d'échappement 34'a et 34'b sont prolongées, à l'intérieur de l'enveloppe cylindrique 31' du collecteur 28', par des conduits respectifs 35'a et 35'b à l'intérieur desquels sont disposés des corps catalyseurs respectifs 32'a et 32'b.

Les extrémités terminales des conduits 35'a et 35'b sont en vis-à-vis et à une certaine distance l'une de l'autre, dans la partie centrale de l'enveloppe cylindrique 31' du collecteur 28'.

L'espace annulaire compris entre les conduits 35'a et 35'b d'une part et la paroi intérieure de l'enveloppe cylindrique 31' du collecteur 28' d'autre part contient un matériau d'adsorption des hydrocarbures 33'.

Le dispositif de traitement de gaz d'échappement disposé à l'intérieur du collecteur 28' du moteur 30' fonctionne d'une manière analogue aux dispositifs de traitement qui ont été décrits plus haut.

Les gaz d'échappement du moteur à essence 30' pénètrent dans la chambre 31' du collecteur 28' dans une direction tangentielle de manière qu'ils constituent un flux tournant autour de l'axe de l'enveloppe 31'. Les gaz d'échappement viennent en contact avec l'adsorbeur d'hydrocarbures 33' puis circulent en contact avec la surface extérieure des conduits 35'a et 35'b, de manière telle qu'ils assurent l'échauffement des corps catalyseurs 32'a et 32'b.

Les gaz d'échappement dans lesquels une partie des hydrocarbures a été prélevée par passage dans l'adsorbeur 33' parviennent dans la zone centrale de l'enveloppe 31' du collecteur 28' entre les corps catalyseurs 32'a et 32'b. Le flux de gaz parvenant à la partie centrale de la chambre du collecteur se sépare en deux flux traversant respectivement le corps catalyseur 32'a à l'intérieur du conduit 35'a et le corps catalyseur 32'b à l'intérieur du conduit 35'b, pour ressortir du collecteur d'échappement 28' par les lignes d'échappement 34'a et 34'b respectivement.

Dans tous les cas, les dispositifs de traitement suivant l'invention permettent d'éviter des rejets importants d'hydrocarbures dans l'atmosphère quelle que soit la phase de fonctionnement d'un moteur à essence.

L'invention ne se limite pas aux modes de réalisation qui ont été décrits.

C'est ainsi qu'on peut imaginer de réaliser l'adsorbeur d'hydrocarbures sous une forme différente de celles qui ont été décrites et assurer son maintien à la périphérie de la chambre du collecteur d'échappement également, d'une manière différente.

Selon la place disponible dans le compartiment moteur du véhicule, le collecteur d'échappement dans lequel est logé le dispositif de traitement des gaz d'échappement peut renfermer plusieurs ensembles constitués chacun par un élément adsorbeur et un corps catalyseur dans des dispositions coaxiales. Les ensembles de traitement des gaz à disposition coaxiale constitués d'un adsorbeur et d'un corps catalyseur peuvent être placés en opposition, à l'intérieur de l'enveloppe du collecteur, comme représenté sur la figure 9, lorsque le collecteur est relié à deux lignes d'échappement opposées. Ces ensembles peuvent être également placés de manière superposée ou bien encore en parallèle dans l'enveloppe du collecteur d'échappement.

Des dispositions particulières des ensembles de traitement des gaz peuvent être nécessitées par exemple pour obtenir un accord d'échappement entre les cylindres d'un moteur.

L'adsorbeur d'hydrocarbures imbrûlés disposé dans une position périphérique à l'intérieur du collecteur peut être réalisé de manière à assurer non seulement le piégeage des hydrocarbures mais encore le piégeage d'autres substances polluantes contenues dans les gaz d'échappement telles que des oxydes d'azote.

L'invention s'applique à tout moteur à essence comportant un collecteur relié à une ligne d'échappement dans lequel débouchent les tubulures d'échappement du moteur, dans une direction tangentielle.

## Revendications

1. Dispositif de traitement des gaz d'échappement d'un moteur (30, 30') à allumage commandé d'un véhicule automobile comportant au moins un corps catalyseur (12, 32, 32'a, 32'b) placé, dans une disposition centrale, à l'intérieur d'un collecteur d'échappement (2, 28, 28') du moteur (30, 30') ayant une enveloppe (3, 31, 31') de forme cylindrique dans laquelle débouche, dans une direction sensiblement tangentielle, au moins une tubulure d'échappement (9, 29, 29') communiquant avec un cylindre du moteur (30, 30') et qui est reliée, à au moins une de ses extrémités longitudinales, à au moins une ligne d'échappement (34, 34'a, 34'b) du véhicule automobile, et au moins un moyen d'adsorption (14, 20, 22, 33, 33') des hydrocarbures des gaz d'échappement dans une disposition périphérique, autour du corps catalyseur (12, 32, 32'a, 32'b), de telle sorte que les gaz d'échappement introduits par la tubulure d'échappement (9, 29, 29') dans l'enveloppe (3, 31, 31') circulent de manière tourbillonnaire autour du corps catalyseur (12, 32, 32'a, 32'b) en contact avec le moyen d'adsorption et avec une surface externe du corps catalyseur (12, 32, 32'a, 32'b).

2. Dispositif selon la revendication 1, caractérisé par le fait que le corps catalyseur (12, 32, 32'a, 32'b) est disposé à l'intérieur d'un conduit (8, 35, 35'a, 35'b) constituant une partie de la ligne d'échappement (34, 34'a, 34'b) disposée à l'intérieur de l'enveloppe (3, 31, 31') du collecteur et que le moyen d'adsorption (14, 20, 22, 33, 33') d'hydrocarbures contenus dans les gaz d'échappement est disposé dans un espace annulaire périphérique ménagé entre le conduit (8, 35, 35'a, 35'b) renfermant le corps catalyseur (12, 32, 32'a, 32'b) et l'enveloppe (3, 31, 31') du collecteur, dans lequel débouche la tubulure d'échappement (9, 29, 29').

3. Dispositif selon l'une quelconque des revendications 1 et 2, caractérisé par le fait que le moyen d'adsorption (14) des hydrocarbures est constitué par une enveloppe tubulaire (15) en tôle métallique revêtue d'au moins un matériau d'adsorption d'hydrocarbures placée à l'intérieur de l'enveloppe (3) du collecteur d'échappement (2), dans une disposition sensiblement coaxiale par rapport à l'enveloppe (3) du collecteur (2), de forme cylindrique.

4. Dispositif suivant la revendication 3, caractérisé par le fait que la tôle métallique constituant l'enveloppe tubulaire (15) du moyen d'adsorption d'hydrocarbures est une tôle ondulée dont les ondulations sont dirigées parallèlement à l'axe de l'enveloppe tubulaire (15) et de l'enveloppe cylindrique (3) du collecteur (2).

5. Dispositif suivant l'une quelconque des revendications 3 et 4, caractérisé par le fait que l'enveloppe tubulaire (15) du moyen d'adsorption d'hydrocarbures est traversée par une pluralités d'ouvertures (16) réparties sur toute sa surface.

6. Dispositif suivant l'une quelconque des revendications 1 et 2, caractérisé par le fait que le moyen d'adsorption d'hydrocarbures est constitué par une couche (19) de fibres métalliques revêtue par au moins un matériau d'adsorption d'hydrocarbures, de forme annulaire, maintenue par un dispositif de maintien (21) contre la surface intérieure de l'enveloppe cylindrique (3) du collecteur (2).

7. Dispositif suivant la revendication 6, caractérisé par le fait que le dispositif (21) de maintien de la couche de fibres (19) est constitué par un élément de forme annulaire constitué par un grillage de fils en acier inoxydable qui est engagé sur une enveloppe (8) renfermant le corps catalyseur (12).

8. Dispositif selon l'une quelconque des revendications 1 et 2, caractérisé par le fait que les moyens (22) d'adsorption d'hydrocarbures dans les gaz d'échappement sont constitués par un lit (23) de billes revêtues d'une couche d'au moins un matériau d'adsorption d'hydrocarbures, de forme annulaire, maintenu contre la surface intérieure de l'enveloppe cylindrique (3) du collecteur d'échappement (2), par un moyen de maintien (24) fixé à l'intérieur de l'enveloppe (3) du collecteur d'échappement (2).

9. Dispositif selon la revendication 8, caractérisé par le fait que le dispositif de maintien (24) du lit de billes (23) est constitué par une enveloppe tubulaire métallique, de préférence en acier inoxydable, traversée par des ouvertures (25) ayant un diamètre inférieur au diamètre des billes du lit (23).

10. Dispositif suivant la revendication 9, caractérisé par le fait que l'enveloppe tubulaire (24) est fixée dans l'enveloppe (3) du collecteur (2), dans une disposition coaxiale à l'enveloppe (3).

11. Dispositif suivant la revendication 8, caractérisé par le fait que le dispositif de maintien du lit de billes (23) est constitué par un élément de forme annulaire en un grillage de fils d'acier inoxydable fixé à l'intérieur de l'enveloppe (3) du collecteur (2) par engagement sur une enveloppe (8) renfermant le corps catalyseur (12).

12. Dispositif suivant l'une quelconque des revendications 8 à 11, caractérisé par le fait que les billes du lit (23) recouvertes d'au moins un adsorbeur d'hydrocarbures sont en alumine.

13. Dispositif suivant l'une quelconque des revendications 1 à 12, pour le traitement des gaz d'échappement d'un moteur à allumage commandé comportant plusieurs cylindres en ligne, caractérisé par le fait que l'enveloppe (31) du collecteur (28) de forme cylindrique présente un axe parallèle à la ligne de cylindres et que des tubulures d'échappement (29) reliées chacune à un cylindre du moteur débouchent dans l'enveloppe (31) du collecteur (28) dans une direction sensiblement tangentielle.

14. Dispositif suivant la revendication 13, caractérisé par le fait que l'enveloppe (31') du collecteur d'échappement (28') est reliée à une ligne d'échappement (34'a, 34'b) à chacune de ses extrémités prolongées chacune à l'intérieur de l'enveloppe (31') du collecteur (28') par un conduit (35'a, 35'b) renfermant un corps catalyseur (32'a, 32'b), les corps catalyseurs (32'a, 32'b) et les conduits (35'a, 35'b) comportant des extrémités à l'intérieur de l'enveloppe (31') du collecteur (28') en vis-à-vis et espacées l'une de l'autre au voisinage de la partie centrale de l'enceinte (31') du collecteur (28').

15. Dispositif selon la revendication 14, caractérisé par le fait qu'un élément d'adsorption d'hydrocarbures est disposé à l'intérieur de l'enveloppe (31') du collecteur d'échappement (28'), autour de chacun des conduits (35'a, 35'b) renfermant un corps catalyseur (32'a, 32'b).

## Claims

1. Device for treating the exhaust gases of a spark ignition engine (30, 30') of a motor vehicle, comprising at least one catalyst body (12, 32, 32'a, 32'b) placed, in a central arrangement, inside an exhaust manifold (2, 28, 28') of the engine (30, 30'), which manifold has a cylindrical casing (3, 31, 31') into which leads, in a substantially tangential direction, at least one exhaust tube (9, 29, 29') communicating with a cylinder of the engine (30, 30') and which is connected, at at least one of its longitudinal ends, to at least one exhaust line (34, 34'a, 34'b) of the motor vehicle, and at least one means (14, 20, 22, 33, 33') for adsorbing the hydrocarbons of the exhaust gases in a peripheral arrangement, around the catalyst body (12, 32, 32'a, 32'b), so that the exhaust gases introduced into the casing (3, 31, 31') by way of the exhaust tube (9, 29, 29') circulate in a swirling manner around the catalyst body (12, 32, 32'a, 32'b) in contact with the adsorption means and with an outer surface of the catalyst body (12, 32, 32'a, 32'b).

2. Device according to claim 1, characterised in that the catalyst body (12, 32, 32'a, 32'b) is arranged inside a duct (8, 35, 35'a, 35'b) constituting a portion of the exhaust line (34, 34'a, 34'b) arranged inside the casing (3, 31, 31') of the manifold and in that the means (14, 20, 22, 33, 33') for adsorbing hydrocarbons contained in the exhaust gases is arranged in a peripheral annular space formed between the duct (8, 35, 35'a, 35'b) containing the catalyst body (12, 32, 32'a, 32'b) and the casing (3, 31, 31') of the manifold into which the exhaust tube (9, 29, 29') leads.

3. Device according to either claim 1 or claim 2, characterised in that the hydrocarbon-adsorption means (14) is constituted by a tubular casing (15) of sheet metal which is covered with at least one hydrocarbon-adsorption material and which is placed inside the casing (3) of the exhaust manifold (2), in a substantially coaxial arrangement relative to the casing (3) of the manifold (2), which is cylindrical.

4. Device according to claim 3, characterised in that the sheet metal constituting the tubular casing (15) of the hydrocarbon-adsorption means is a corrugated sheet, the corrugations of which are directed parallel with the axis of the tubular casing (15) and of the cylindrical casing (3) of the manifold (2).

5. Device according to either claim 3 or claim 4, characterised in that the tubular casing (15) of the hydrocarbon-adsorption means is traversed by a plurality of openings (16) distributed over its entire surface.

6. Device according to either claim 1 or claim 2, characterised in that the hydrocarbon-adsorption means is constituted by an annular layer (19) of metal fibres which is covered with at least one hydrocarbon-adsorption material and which is held against the inner surface of the cylindrical casing (3) of the manifold (2) by a holding device (21).

7. Device according to claim 6, characterised in that the device (21) for holding the layer of fibres (19) is constituted by an annular element formed by stainless steel wire netting which is engaged on a casing (8) containing the catalyst body (12).

8. Device according to either claim 1 or claim 2, characterised in that the means (22) for adsorbing hydrocarbons in the exhaust gases are constituted by an annular bed (23) of balls which are covered with layer of at least one hydrocarbon-adsorption material, which bed is held against the inner surface of the cylindrical casing (3) of the exhaust manifold (2) by a holding means (24) secured to the inside of the casing (3) of the exhaust manifold (2).

9. Device according to claim 8, characterised in that the holding device (24) for the bed (23) of balls is constituted by a tubular metal casing, preferably of stainless steel, which is traversed by openings (25) having a diameter smaller than the diameter of the balls of the bed (23).

10. Dcvice according to claim 9, characterised in that the tubular casing (24) is secured in the casing (3) of the manifold (2) in an arrangement coaxial with the casing (3).

11. Device according to claim 8, characterised in that the device for holding the bed (23) of balls is constituted by an annular element of stainless steel wire netting secured to the inside of the casing (3) of the manifold (2) by engagement on a casing (8) containing the catalyst body (12).

12. Device according to any one of claims 8 to 11, characterised in that the balls of the bed (23), which are covered with at least one hydrocarbon adsorber, are of alumina.

13. Device according to any one of claims 1 to 12, for treating the exhaust gases of a spark ignition engine comprising several in-line cylinders, characterised in that the cylindrical casing (31) of the manifold (28) has an axis parallel with the line of cylinders and in that the exhaust tubes (29), which are each connected to a cylinder of the engine, lead into the casing (31) of the manifold (28) in a substantially tangential direction.

14. Device according to claim 13, characterised in that the casing (31') of the exhaust manifold (28') is connected to an exhaust line (34'a, 34'b) at each of its ends, each of which exhaust lines is extended, inside the casing (31') of the manifold (28'), by a duct (35'a, 35'b) containing a catalyst body (32'a, 32'b), the catalyst bodies (32'a, 32'b) and the ducts (35'a, 35'b) comprising ends inside the casing (31') of the manifold (28') which are opposite and spaced from one another in the vicinity of the central portion of the enclosed space (31') of the manifold (28').

15. Device according to claim 14, characterised in that a hydrocarbon-adsorption element is arranged inside the casing (31') of the exhaust manifold (28'), around each of the ducts (35'a, 35'b) containing a catalyst body (32'a, 32'b).

## Patentansprüche

1. Vorrichtung zur Behandlung der Abgase eines Ottomotors (30, 30') eines Kraftfahrzeugs mit mindestens einem Katalysatorkörper (12, 32, 32'a, 32'b), der in einer zentralen Anordnung im Inneren eines Abgassammlers (2, 28, 28') des Motors (30, 30') angeordnet ist, der einen Mantel (3, 31, 31') zylindrischer Form aufweist, in den in einer im wesentlichen tangentialen Richtung mindestens ein mit einem Zylinder des Motors (30, 30') verbundener Abgasstutzen (9, 29, 29') mündet und der mindestens an einem seiner Längsenden mit mindestens einer Abgasleitung (34, 34'a, 34'b) des Kraftfahrzeugs verbunden ist, und mit mindestens einer Einrichtung (14, 20, 22, 33, 33') zur Adsorption der Kohlenwasserstoffe der Abgase in einer peripheren Anordnung um den Katalysatorkörper (12, 32, 32'a, 32'b) herum, so dass die über den Abgasstutzen (9, 29, 29') in den Mantel (3, 31, 31') eingeführten Abgase (3, 31, 31') wirbelig um den Katalysatorkörper (12, 32, 32'a, 32'b) herum in Kontakt mit der Adsorptionseinrichtung und mit einer Außenfläche des Katalysatorkörpers (12, 32, 32'a, 32'b) zirkulieren.

2. Vorrichtung nach Anspruch 1, dadurch gekennzeichnet, dass der Katalysatorkörper (12, 32, 32'a, 32'b) im Inneren eines Rohrs (8, 35, 35'a, 35'b) angeordnet ist, das einen Teil der Abgasleitung (34, 34'a, 34'b) bildet, der im Inneren des Mantels (3, 31, 31') des Sammlers angeordnet ist, und dass die Einrichtung (14, 20, 22, 33, 33') zur Adsorption der in den Abgasen enthaltenen Kohlenwasserstoffe in einem ringförmigen Umfangsraum angeordnet ist, der zwischen dem den Katalysatorkörper (12, 32, 32'a, 32'b) einschließenden Rohr (8, 35, 35'a, 35'b) und dem Mantel (3, 31, 31') des Sammlers angeordnet ist und in den der Abgasstutzen (9, 29, 29') mündet.

3. Vorrichtung nach einem der Ansprüche 1 und 2, dadurch gekennzeichnet, dass die Einrichtung (14) zur Adsorption von Kohlenwasserstoffen aus einem rohrförmigen Mantel (15) aus Metallblech besteht, der mit mindestens einem Kohlenwasserstoff adsorbierenden Material überzogen ist und im Inneren des zylindrischen Mantels (3) des Abgassammlers (2) im wesentlichen koaxial zu diesem angeordnet ist.

4. Vorrichtung nach Anspruch 3, dadurch gekennzeichnet, dass das den rohrförmigen Mantel (15) der Einrichtung zur Adsorption von Kohlenwasserstoffen bildende Metallblech ein gewelltes Blech ist, dessen Wellen parallel zur Achse des rohrförmigen Mantels (15) und des zylindrischen Mantels (3) des Sammlers (2) gerichtet sind.

5. Vorrichtung nach einem der Ansprüche 3 und 4, dadurch gekennzeichnet, dass der rohrförmige Mantel (15) der Einrichtung zur Adsorption von Kohlenwasserstoffen von einer Vielzahl von Öffnungen (16) durchquert wird, die auf seiner ganzen Oberfläche verteilt sind.

6. Vorrichtung nach einem der Ansprüche 1 und 2, dadurch gekennzeichnet, dass die Einrichtung zur Adsorption von Kohlenwasserstoffen aus einer ringförmigen Schicht (19) von Metallfasern besteht, die mit mindestens einem Kohlenwasserstoffe adsorbierenden Material überzogen ist und durch eine Haltevorrichtung (21) an die Innenwand des zylindrischen Mantels (3) des Sammlers (2) angedrückt gehalten wird.

7. Vorrichtung nach Anspruch 6, dadurch gekennzeichnet, dass die Haltevorrichtung (21) der Faserschicht (19) aus einem ringförmigen Element besteht, das von einem Gitterwerk aus rostfreien Stahldrähten gebildet ist, das auf einen Mantel (8) aufgesteckt ist, der den Katalysatorkörper (12) einschließt.

8. Vorrichtung nach einem der Ansprüche 1 und 2, dadurch gekennzeichnet, dass die Einrichtungen (22) zur Adsorption von Kohlenwasserstoffen in den Abgasen aus einem ringförmigen Bett (23) von Kugeln, die mit einer Schicht mindestens eines Kohlenwasserstoff adsorbierenden Materials überzogen sind, bestehen, das durch eine im Inneren des Mantels (3) des Abgassammlers (2) befestigte Halteeinrichtung (24) an die Innenfläche des zylindrischen Mantels (3) des Abgassammlers (2) angedrückt gehalten wird.

9. Vorrichtung nach Anspruch 8, dadurch gekennzeichnet, dass die Haltevorrichtung (24) des Kugelbetts (23) aus einem rohrförmigen Mantel aus Metall, vorzugsweise aus rostfreiem Stahl, besteht, der von Öffnungen (25) durchquert wird, deren Durchmesser kleiner als der Durchmesser der Kugeln des Betts (23) ist.

10. Vorrichtung nach Anspruch 9, dadurch gekennzeichnet, dass der rohrförmige Mantel (24) in dem Mantel (3) des Sammlers (2) in einer zum Mantel (3) koaxialen Stellung befestigt ist.

11. Vorrichtung nach Anspruch 8, dadurch gekennzeichnet, dass die Haltevorrichtung des Kugelbetts (23) aus einem ringförmigen Element aus einem Gitterwerk aus rostfreien Stahldrähten gebildet ist, das im Inneren des Mantels (3) des Sammlers (2) durch Aufstecken auf einen den Katalysatorkörper (12) einschließenden Mantel (8) befestigt ist.

12. Vorrichtung nach einem der Ansprüche 8 bis 11, dadurch gekennzeichnet, dass die Kugeln des Betts (23), die mit mindestens einem Kohlenwasserstoffe adsorbierenden Material überzogen sind, aus Aluminiumoxid bestehen.

13. Vorrichtung nach einem der Ansprüche 1 bis 12 zur Behandlung der Abgase eines Mehrzylinderreihenottomotors, dadurch gekennzeichnet, dass der zylindrische Mantel (31) des Sammlers (28) eine zur Reihe der Zylinder parallele Achse aufweist und dass Abgasstutzen (29), die jeweils mit einem Zylinder des Motors verbunden sind, in den Mantel (31) des Sammlers (28) in einer im wesentlichen tangentialen Richtung münden.

14. Vorrichtung nach Anspruch 13, dadurch gekennzeichnet, dass der Mantel (31') des Abgassammlers (28') an jedem seiner Enden mit einer Abgasleitung (34'a, 34'b) verbunden ist, die im Inneren des Mantels (31') des Sammlers (28') jeweils durch ein Rohr (35'a, 35'b) verlängert ist, das jeweils einen Katalysatorkörper (32'a, 32'b) einschließt, wobei die Katalysatorkörper (32'a, 32'b) und die Rohre (35'a, 35'b) im Inneren des Mantels (31') des Sammlers (28') in Nähe des mittleren Teils des Mantels (31') des Sammlers (28') einander gegenüberstehende und voneinander entfernte Enden aufweisen.

15. Vorrichtung nach Anspruch 14, dadurch gekennzeichnet, dass im Inneren des Mantels (31') des Abgassammlers (28') ein Element zur Adsorption von Kohlenwasserstoffen angeordnet ist, das jedes der einen Katalysatorkörper (32'a, 32'b) umschließenden Rohre (35'a, 35'b) umgibt.
